# EUROPEAN PATENT SPECIFICATION

(11) **EP 4 189 005 B1**
(45) Date of publication and mention of the grant of the patent: **18.02.2026**
(21) Application number: 21745783.7
(22) Date of filing: 15.07.2021
(51) Int. Cl.: C08K 5/5313, C08K 3/013, C08K 3/34, C08K 5/134, C08K 5/29, C08K 5/3492, C08K 5/5393, C08L 67/00, C08L 75/04, C08L 77/00, C08L 67/02, C08L 77/02

(54) **FLAME RETARDANT-STABILIZER COMBINATIONS FOR FLAME-RETARDANT POLYMERS HAVING IMPROVED HYDROLYSIS STABILITY AND USE THEREOF**
FLAMMSCHUTZMITTEL-STABILISATOR-KOMBINATIONEN FÜR FLAMMGESCHÜTZTE POLYMERE MIT VERBESSERTER HYDROLYSESTABILITÄT UND DEREN VERWENDUNG
COMBINAISONS IGNIFUGES-STABILISATEURS POUR POLYMÈRES ININFLAMMABLES À RÉSISTANCE AMÉLIORÉE À L'HYDROLYSE ET LEUR UTILISATION

(30) Priority: 30.07.2020 EP 20188649
(43) Date of publication of application: 07.06.2023
(73) Proprietor: Clariant International Ltd, 4132 Muttenz (CH)
(72) Inventor: HOEROLD, Sebastian, 86420 Diedorf (DE); LEUSCHNER, Eva, Maria, 86163 Augsburg (DE)
(74) Representative: Zusammenschluss Clariant
(86) International application number: PCT/EP2021/069839
(87) International publication number: WO 2022/023064

(56) References cited:
- EP-A1- 2 365 030
- WO-A1-2009/110230
- KR-A- 20170 128 024
- DATABASE CA [online] CHEMICAL ABSTRACTS SERVICE, COLUMBUS, OHIO, US; 28 November 2017 (2017-11-28), JUNG, YEON JAE ET AL: "Composition for electric wire and charging cable", XP002801698, retrieved from STN Database accession no. 2017:1859766
- DATABASE CA [online] CHEMICAL ABSTRACTS SERVICE, COLUMBUS, OHIO, US; 24 November 2009 (2009-11-24), YAMADA, SHINYA: "Flame-retardant resin composition and coated electrical wire therewith", XP002801697, retrieved from STN Database accession no. 2009:1165957

## Description

The invention relates to mixtures of flame retardants, anti-hydrolysis additives and further admixtures for flame-retardant polymers such as polyester, polyurethane and polyamide compounds having improved fire properties, excellent hydrolysis resistance and good mechanical properties, and to polymeric moulding compounds and mouldings comprising such flame retardant-additive combinations.

Owing to their chemical composition, many plastics are readily combustible. In order to be able to attain the high flame retardancy demands made by plastics processors and in some cases by the legislator, plastics therefore generally have to be modified with flame retardants. For this purpose, a multitude of different flame retardants and flame retardant synergists are known and also commercially available.

Thermoplastic polyesters, polyamides and polyurethanes have long been used as materials owing to their good mechanical and electrical properties. As well as their thermal and chemical properties, hydrolysis stability is becoming increasingly important. Examples of these are applications in the electronics sector (e.g. covers for circuit breakers) and the automotive sector (e.g. plugs, sensors, housing parts). In the applications mentioned, improved stability is required in the case of storage under moist and warm conditions.

Furthermore, there is increasing market interest in polymer moulding compounds with halogen-free flame retardancy. The essential demands here on the flame retardant are light intrinsic colour, adequate thermal stability during polymer processing, and flame-retardant efficacy in reinforced and unreinforced polymer. However, flame-retardant thermoplastic polyester moulding compounds generally have reduced hydrolysis stability since, firstly, the proportion of polymer matrix is reduced and, secondly, there can also be adverse interactions between water, flame retardant and polymer matrix, and interactions between flame-retardant and anti-hydrolysis additive. Among the halogen-free flame retardants, the salts of phosphinic acids (phosphinates) in particular have been found to be particularly effective for thermoplastic polyesters (DE-A-2252258 and DE-A-2447727). Calcium phosphinates and aluminium phosphinates have been described as very effective in polyesters and impair the material properties of the polymer moulding compounds to a lesser degree than the alkali metal salts, for example (EP-A-0699708).

In addition, synergistic combinations of phosphinates with various nitrogen compounds have been found, and these have been found to be more effective as flame retardants in a whole series of polymers than the phosphinates alone (WO 97/39053 A1, DE-A-19734437, DE-A-19737727 and US-A-6,255,371).

As well as flame retardancy, polymeric materials, according to the application, must also withstand storage in water or under moist and warm conditions with retention of at least some of their mechanical properties. Customary storage conditions in a climate-controlled cabinet are, for example, 85°C and 85% relative humidity for 40 days. Various additives are described for improvement of the hydrolysis stability of polyesters, polyurethanes and polyamides, but these are frequently not usable together with flame retardants.

DE10359816 A1 describes a flame retardant-stabilizer combination for polyesters and polyamides, composed of phosphinates and chain extenders selected from the classes of the bislactams, bisoxazolines, anhydrides of polybasic carboxylic acids and epoxy compounds, in order to counteract the chain degradation caused by phosphinates. The compounds described here do show a reduction in polymer degradation on compounding, but do not bring any significant improvement in the hydrolysis properties of the flame-retardant polymers.

DE-B-1285747 describes the use of polycarbodiimides having a molecular weight exceeding 500 and a content of more than three carbodiimide groups as a stabilizing agent against the effects of heat and moisture in plastics containing ester groups. There is no description of addition of flame retardants.

DE 19920276 A1 describes thermoplastic moulding compounds comprising a thermoplastic polymer, a phosphorus compound and a carbodiimide stabilizer compound, for example

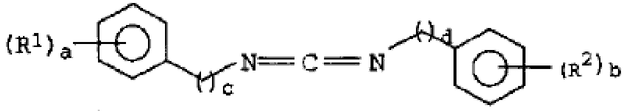

The phosphorus compound described in the examples is resorcinol bis(diphenyl phosphate), the stabilizer compound described is, for example, Stabaxol P (from Lanxess) 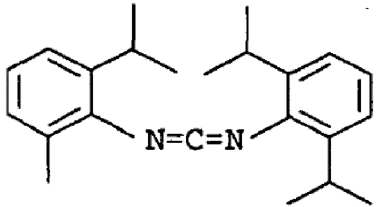 and the polymers described are **PBT** and **PET** mixtures. A disadvantage of the stabilizer compounds described is that they are a matter of toxicological concern. For instance, monomeric carbodiimides are considered to be carcinogenic. Another problem can be emissions in the course of polymer processing (compounding, injection moulding, extruding). Low copper corrosion has been mentioned as being advantageous. There are no pointers to hydrolysis stability of the compositions described.

WO 2004/069912 A1 and WO 2006/120184 A1, and also US 7375167 B2, disclose polyester moulding compounds comprising epoxidized natural oils that are used as additives for hydrolysis stability.

JP01/221448 discloses that halogenated flame-retardant polyester moulding compounds can be hydrolysis-stabilized by addition of epoxy compounds and polyolefins.

EP 2989153 B1 describes the use of polyester moulding compounds formed from a thermoplastic polyester, an epoxidized natural oil having an epoxy equivalent weight according to DIN EN ISO 3001 of 100 to 400 eq/g, a phosphinate and a melamine compound for production of stress cracking-resistant and halogen-free flame-retardant polyester moulding compounds. A disadvantage is the difficulty of dosage of the liquid epoxidized oils in the course of compounding. Moreover, good stress cracking resistances are achieved only with aluminium hypophosphite, but not with aluminium diethylphosphinate. However, aluminium hypophosphite cannot achieve high fire protection classes in polyesters.

DE 102010053483 A1 describes the use of -N=C=N-containing compounds for prevention or for reduction of the thermal degradation of metal dialkylphosphinate-containing polyalkylene terephthalate melts, and a method of using -N=C=N-containing compounds in the prevention or reduction of the thermal degradation of metal dialkylphosphinate-containing polyalkylene terephthalate melts. In the examples, the melt index (MVR) is measured after 5 and after 20 min, and cited as a measure of the thermal degradation of the melt. There are no pointers to the hydrolysis characteristics of the polyesters in the melt.

EP 2365028 discloses the use of -N=C=N-containing compounds for prevention or reduction of the thermal degradation of metal dialkylphosphinate-containing polyalkylene terephthalates in the melt. There are no pointers to the hydrolysis characteristics of the polyesters in the melt.

Although the use of (poly)carbodiimides (EP-A-794974) or of (poly)epoxy compounds (DE T1 69231831) leads to an improvement in melt stability, the polyester compositions described have processing drawbacks, especially as a result of increasing molecular weight and a resultant high melt viscosity.

A disadvantage of the prior art processes is the inadequate hydrolysis stability of the polymers, and the use of monomeric carbodiimides that are of toxicological concern. When epoxy compounds are used in thermoplastic polymers, especially in conjunction with flame retardants, there can additionally be crosslinking of the polymer chains and hence considerable rises in viscosity.

The problem addressed by the present application was that of providing a flame retardant-stabilizer combination for the modification of flame-retardant and hydrolysis-resistant polymer compositions, which additionally feature good mechanical values, no discolouration, no polymer degradation on processing and no use of compounds of toxicological concern.

The solution to the problem, and the subject-matter of the present invention, is the use of a combination of selected stabilizers and/or lubricants with polymeric - N=C=N-containing compounds for improvement of the hydrolysis stability of dialkylphosphinate-containing polymers.

It has been found that, surprisingly, the use of mixtures of selected stabilizers and/or lubricants and polymeric carbodiimide compounds in conjunction with dialkylphosphinates is suitable for production of flame-retardant polyester, polyamide or polyurethane moulding compounds having excellent hydrolysis stability. At the same time, flame retardancy properties and mechanical, optical and electrical properties meet the profile of demands for the applications mentioned, especially in the transport sector and the electrical and electronics sector.

The present invention relates to mixtures comprising
- as component A 10% to 80% by weight of a phosphinic salt of the formula (Ia), a diphosphinic salt of the formula (Ib), or polymers or mixtures of two or more thereof, 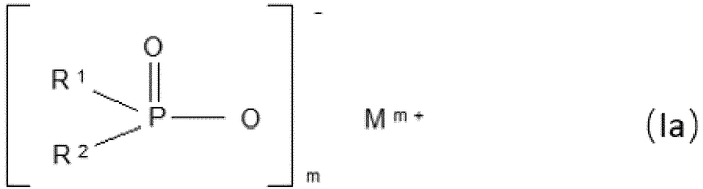 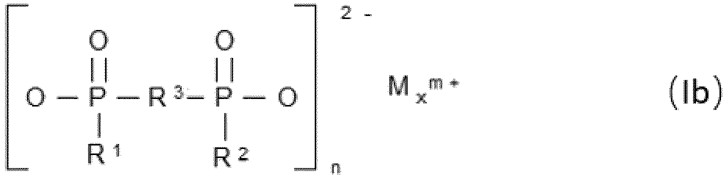 in which
   - R¹, R²: are the same or different and are H or C₁-C₆-alkyl, linear or branched, and/or aryl,
   - R³: is C₁-C₁₀-alkylene, linear or branched, C₆-C₁₀-arylene, -alkylarylene or -arylalkylene,
   - M: is H, Mg, Ca, Al, Sb, Sn, Ge, Ti, Fe, Zn, Zr, Ce, Bi, Sr, Mn, Li, Na, K and/or a protonated nitrogen base,
   - m: is 1 to 4,
   - n: is 1 to 4, and
   - x: is 1 to 4,
- as component B 0.5% to 20% by weight of a polymeric carbodiimide compound or mixtures thereof,
- as component C 0.5% to 20% by weight of a sterically hindered phenol or mixtures thereof,
- as component D 0% to 20% by weight of an organic phosphite and/or organic phosphonite or mixtures thereof,
- as component E 10% to 40% by weight of a condensation product of melamine;
- as optional component F 10% to 70% by weight of a filler or reinforcer or mixtures thereof, and
- as component G 1% to 30% by weight of a lubricant and/or demoulding agent or mixtures thereof,
- as component H 0% to 40% by weight of further additives other than components A to G,
   where the sum total of the weight components is 100% by weight.

The term "phosphinic salt" hereinafter encompasses salts of the phosphinic and diphosphinic acids and polymers thereof, and the phosphinic acids themselves. The phosphinic salts that are produced in an aqueous medium are essentially monomeric compounds. Depending on the reaction conditions, polymeric phosphinic salts may also form under some circumstances.

Suitable phosphinic acids as a constituent of the phosphinic salts are, for example: dimethylphosphinic acid, ethylmethylphosphinic acid, diethylphosphinic acid, methyl-n-propylphosphinic acid, methanedi(methylphosphinic acid), benzene-1,4-(dimethylphosphinic acid), methylphenylphosphinic acid and diphenylphosphinic acid.

The salts of the phosphinic acids according to the present invention may be prepared by known methods, as described in detail, for example, in EP-A-0699708.

The aforementioned phosphinic salts may be employed in various physical forms for the flame retardant-stabilizer mixtures or polymer compounds according to the invention according to the type of polymer used and the desired properties. For example, the phosphinic salts may be ground to a finely divided form in order to achieve better dispersion in the polymer. It is also possible to use mixtures of different phosphinic salts.

The phosphinic salts used according to the invention are thermally stable, and do not break the polymers down on incorporation, nor do they affect the process for production of the polymer moulding compound. The phosphinic salts are nonvolatile under the customary preparation and processing conditions for polymers, such as polyesters, polyamides and thermoplastic polyurethanes.

Phosphinic salts of component A that are to be used with preference in accordance with the invention are compounds of the abovementioned formulae (Ia) and (Ib) in which R¹ and R² are the same or different and are methyl, ethyl, n-propyl, isopropyl, n-butyl, tert-butyl, n-pentyl and/or phenyl, more preferably methyl, ethyl, n-propyl and/or n-butyl, and most preferably ethyl.

Further phosphinic salts of component A that are to be used with preference in accordance with the invention are compounds of the abovementioned formula (Ib) in which R³ is methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene or phenylbutylene, most preferably ethylene, n-propylene, n-butylene or phenylene.

Phosphinic salts of component A that are to be used with preference in accordance with the invention are compounds of the abovementioned formulae (Ia) and (Ib) in which M is Mg, Ca, Al, Ti, Fe, Zn, Ce, Bi, Sr or Mn.

More preferably, M is magnesium, calcium, aluminium or zinc, most preferably aluminium or zinc.

Preferably, m is 2 or 3; n is 1 or 3; x is 1 or 2.

The preferred amount of the phosphinic salts of component A added is 10% to 80% by weight, based on the flame retardant-stabilizer mixture comprising components A to B and optionally C to H.

Polymeric carbodiimide compounds in the context of this description are understood to mean compounds having at least two -N=C=N- groups per molecule, preferably at least five -N=C=N- groups per molecule and most preferably at least ten -N=C=N- groups per molecule.

Particularly preferred components B are carbodiimide compounds having a molecular weight of at least 2000, especially of at least 3000 and most preferably of at least 5000.

The molecular weight of the carbodiimides can be ascertained, for example, by gel permeation chromatography in tetrahydrofuran at 40°C against polystyrene as standard. For example, it is possible to use three series-connected columns (consisting of a divinylbenzene-crosslinked polystyrene) from PSS PolymerStandards Service GmbH with a particle size of 5 µm and pore sizes between 100 and 500 Å at a flow rate of 1 ml/min. This method is described, for example, in EP 2430062 B1.

Polymeric -N=C=N-containing compounds of component B that are to be used with preference in accordance with the invention are compounds of the general formulae (II) and (III) 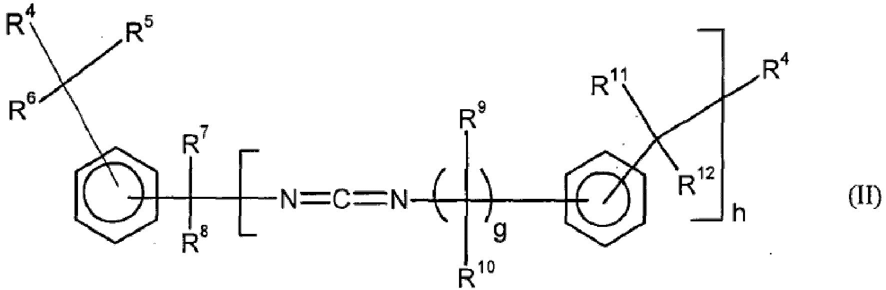 where
R⁴ is NCO,
R⁵, R⁶, R⁷, R⁸, R⁹, R¹⁰, R¹¹ and R¹²
   are independently hydrogen, or a radical from the group of C₁- to C₁₀-alkyl, C₆- to C₁₂-aryl, C₇- to C₁₃-aralkyl or C₇- to C₁₃-alkylaryl,
g is an integer from 0 to 5,
h is an integer from 2 to 100; 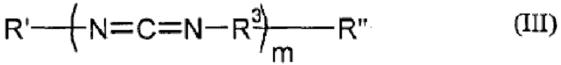
where, in formula (III),
   - m: is an integer from 2 to 5000, preferably an integer from 2 to 500,
   - R³: is an arylene radical, preferably a 4,4'-methylenebis(2,6-dialkylphenyl) radical that bears, in at least one ortho position, preferably in both ortho positions, to the aromatic carbon atom that bears the -N=C=N- group, aliphatic and/or cycloaliphatic substituents having at least 2 carbon atoms, preferably branched or cycloaliphatic radicals having at least 3 carbon atoms,
   - R': is aryl, aralkyl, aryl-NCO or aralkyl-NCO and
   - R": is -N=C=N-aryl, -N=C=N-aralkyl or -NCO.

According to the invention, the term "-N=C=N-containing compounds" encompasses -N=C=N-containing polymers obtained by free radical polymerization involving monomers containing double bonds and having at least one -N=C=N- group.

-N=C=N-containing compounds used with particular preference as component B are compounds of the formulae (IV) and (V) 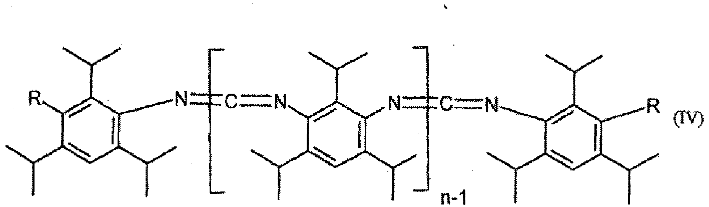 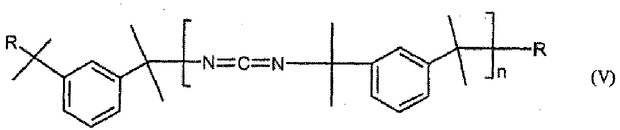 where
- R: is =NCO
in which
- n: is an integer from 2 to 200.

In an alternative embodiment, the terminal -NCO groups of the compounds (II) to (V) are independently also -NCO reaction products. This includes the reaction with alcohols to give urethanes of the general formula -NHCOOX where -OX is an alkyl polyether glycol, a polyester polyol, an alcohol having 1 to 20 carbon atoms or a polyester radical, the reaction with amines to give urea derivatives of the general formula -NHCONY where -NY represents primary and secondary amines having alkyl, cycloalkyl or aralkyl radicals, and aminoalkyltrialkoxysilane, and the reaction with glycidyl ethers to give oxazolidones. According to the invention, preference is given to the reaction products with alcohols to give urethanes.

Particular preference is given in accordance with the invention to using -N=C=N-containing polymeric compounds of the formula (IV) with R = NCO, which are available as Stabaxol^{®} P from Lanxess AG and have a melting point of 50°C or higher.

Very particular preference is given in accordance with the invention to using -N=C=N-containing high molecular weight polymeric compounds that are available as Stabaxol^{®} P100 from Lanxess AG and have melting points of 75°C or higher and have molecular weights of at least 3000 g/mol.

The content of carbodiimide groups in the compounds of component B is preferably at least 10 mol%, more preferably at least 13 mol%.

The preferred amount of the polymeric carbodiimides of component B added is 5% to 10% by weight, based on the flame retardant-stabilizer mixture comprising components A to B and optionally C to H.

Organic carbodiimides are known. Their chemistry is described, for example, in Chemical Reviews, Vol. 53 (1953), pages 145 to and Angewandte Chemie 74 (1962), pages 801 to 806.

Carbodiimides may be prepared, for example, by the action of basic catalysts on sterically hindered polyisocyanates with elimination of carbon dioxide. Suitable basic catalysts are, for example, heterocyclic compounds containing bound phosphorus according to GB-A-1 083 410, and phospholenes and phospholidines and their oxides and sulfides as per DE-B-11 30 594 (GB-A-851 936). The carbodiimides preferably find use as stabilizers against hydrolytic cleavage of polyester-based plastics.

The sterically hindered phenols added as component C in accordance with the invention are antioxidants known per se.

Antioxidants used with preference as component C are alkylated monophenols, e.g. 2,6-di-tert-butyl-4-methylphenol or 2,6-di-tert-butyl-4-methoxyphenol; sterically hindered alkylthiomethylphenols, e.g. 2,4-dioctylthiomethyl-6-tert-butylphenol, sterically hindered hydroxylated thiodiphenyl ethers, e.g. 2,2'-thiobis(6-tert-butyl-4-methylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-di-methyl-4-hydroxyphenyl) disulfide; sterically hindered alkylidenebisphenols, e.g. 2,2'-methylenebis(6-tert-butyl-4-methylphenol); sterically hindered benzylphenols, e.g. 3,5,3',5'-tetra-tert-butyl-4,4'-dihydroxydibenzyl ether; sterically hindered hydroxybenzylated malonates, e.g. dioctadecyl 2,2-bis(3,5-di-tert-butyl-2-hydroxybenzyl)malonate; sterically hindered hydroxybenzylaromatics, e.g. 1,3,5-tris(3,5-di-tert-butyl)-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol; sterically hindered phenolic triazine compounds, e.g. 2,4-bisoctylmercapto-6-(3,5-di-tert-butyl-4-hydroxyanilino)-1,3,5-triazine; sterically hindered phenolic benzylphosphonates, e.g. dimethyl 2,5-di-tert-butyl-4-hydroxybenzylphosphonate; alkyl N-(3,5-di-tert-butyl-4-hydroxyphenyl)carbamates; esters of β-(3,5-di-tert-butyl-4-hydroxyphenyl)propionic acid with mono- or polyhydric alcohols; esters of β-(5-tert-butyl-4-hydroxy-3-methylphenyl)propionic acid with mono- or polyhydric alcohols; esters of β-(3,5-dicyclohexyl-4-hydroxyphenyl)propionic acid with mono- or polyhydric alcohols; esters of 3,5-di-tert-butyl-4-hydroxyphenylacetic acid with mono- or polyhydric alcohols; amides of β-(3,5-di-tert-butyl-4-hydroxyphenyl)propionic acid, for example N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine or N,N'-bis(3,5-di-tert-butyl-4-hydroxyphenylpropionyl)hydrazine.

The preferred amount of the sterically hindered phenols of component C added is 0.5% to 20% by weight, especially 1% to 10% by weight and most preferably 3% to 5% by weight, based on the flame retardant-stabilizer mixture comprising components A to B and optionally C to H.

The organic phosphites and/or organic phosphonites added in accordance with the invention as component D are co-stabilizers for antioxidants that are known per se.

Organic phosphites have the general formula P(OR)₃ in which R are monovalent organic radicals.

Organic phosphonites have the general formula PR^{'}(OR)₂ in which R and R^{'} are monovalent organic radicals.

Examples of suitable organic phosphites are triaryl phosphites, diaryl alkyl phosphites, aryl dialkyl phosphites, trialkyl phosphites.

Examples of triaryl phosphites are triphenyl phosphites, especially tris(nonylphenyl) phosphite or tris(2,4-di-tert-butylphenyl) phosphite.

Examples of diaryl alkyl phosphites are diphenyl alkyl phosphites, especially bis(2,4-di-tert-butyl-6-methylphenyl) methyl phosphite or bis(2,4-di-tert-butyl-6-methylphenyl) ethyl phosphite.

Examples of aryl dialkyl phosphites are phenyl dialkyl phosphites.

Examples of trialkyl phosphites are C₁₂-C₁₈-trialkyl phosphites, especially trilauryl phosphite or trioctadecyl phosphite.

Examples of further suitable organic phosphites are pentaerythritol diphosphites, such as distearyl pentaerythritol diphosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, diisodecyloxy pentaerythritol diphosphite, bis(2,4-di-tert-butyl-6-methylphenyl) pentaerythritol diphosphite or bis(2,4,6-tris(tert-butylphenyl)) pentaerythritol diphosphite.

Further suitable organophosphites are tristearyl sorbitol triphosphite, 2,2',2"-nitrilo[triethyl tris(3,3',5,5'-tetra-tert-butyl-1,1'-biphenyl-2,2'-diyl)phosphite] or 2-ethylhexyl (3,3',5,5'-tetra-tert-butyl-1,1'-biphenyl-2,2'-diyl)phosphite.

Particular preference is given to using, as component C, N,N'-bis[3-(3',5'-di-tert-butyl-4'-hydroxyphenyl)propionyl]hexamethylenediamine (e.g. Irganox^{®} 1098, BASF), and, as component D, tris(2,4-di-tert-butylphenyl) phosphite (e.g. Irgafos^{®} 168, BASF).

Particular preference is given to using, as component C, N,N'-bis[3-(3',5'-di-tert-butyl-4'-hydroxyphenyl)propionyl]hexamethylenediamine (e.g. Irganox^{®} 1098, BASF), and, as component D, tetrakis(2,4-di-tert-butylphenyl)[1,1-biphenyl]-4,4'-diyl bisphosphonite (e.g. Sandostab^{®} P-EPQ, Clariant).

The preferred amount of the organic phosphites and/or the organic phosphonites of component D added is 0.5% to 20% by weight, especially 1% to 10% by weight and most preferably 3% to 5% by weight, based on the flame retardant-stabilizer mixture comprising components A to B and optionally C to H.

The flame retardant-stabilizer combination according to the invention preferably comprises, as component E, a condensation product of melamine.

More preferably, the flame retardant-stabilizer combination according to the invention comprises, as component E, a melamine polyphosphate having an average degree of condensation of not less than 20.

The use of the polyphosphate derivatives of melamine having a degree of condensation of not less than 20 that are preferably used in accordance with the invention as component E as flame retardants is known. For instance, DE 102005016195 A1 discloses a stabilized flame retardant comprising 99% to 1% by weight of melamine polyphosphate and 1% to 99% by weight of additive with reserve alkalinity. This document also discloses that this flame retardant can be combined with a phosphinic acid and/or a phosphinic salt.

Very particularly preferred flame retardant-stabilizer combinations according to the invention comprise, as component E, a melamine polyphosphate having an average degree of condensation of 20 to 200, especially of 40 to 150.

Further preferred flame retardant-stabilizer combinations according to the invention comprise, as component E, a melamine polyphosphate having a breakdown temperature of not less than 320°C, especially of not less than 360°C and most preferably of not less than 400°C.

Preference is given to using, as component E, melamine polyphosphates that are known from WO 2006/027340 A1 (corresponding to EP 1789475 B1) and WO 2000/002869 A1 (corresponding to EP 1095030 B1).

Preference is given to using melamine polyphosphates as component E that have an average degree of condensation between 20 and 200, especially between 40 and 150, and having a melamine content of 1.1 to 2.0 mol, especially 1.2 to 1.8 mol, per mole of phosphorus atom.

Preference is likewise given to using melamine polyphosphates as component E that have an average degree of condensation (number-average) of > 20, having a breakdown temperature of greater than 320°C, having a molar ratio of 1,3,5-triazine compound to phosphorus of less than 1.1, especially 0.8 to 1.0, and having a pH of a 10% slurry in water at 25°C of 5 or higher, preferably 5.1 to 6.9.

In a further preferred embodiment, the flame retardant-stabilizer combination according to the invention comprises, as component E, melamine cyanurate.

The melamine cyanurate, used in accordance with the invention as component E, is known as a synergist in conjunction with diethylphosphinates in flame retardants for polymeric moulding compounds, for example from WO 97/39053 A1.

Most preferably, component E is melamine cyanurate, melamine phosphate, dimelamine phosphate, melamine pyrophosphate, melamine polyphosphates, melam polyphosphates, melem polyphosphates and/or melon polyphosphates.

Component E is exceptionally preferably melamine condensation products such as melam, melem and/or melon, especially melem.

The preferred amount of the melamine (derivatives) of component E added is 10% to 40% by weight, based on the flame retardant-stabilizer mixture comprising components A to B and optionally C to H.

Examples of component F are mineral particulate fillers based on talc, mica, silicate, quartz, titanium dioxide, wollastonite, kaolin, amorphous silicas, magnesium carbonate, chalk, feldspar and/or barium sulfate and/or glass fibres. Most preferred are glass fibres.

The preferred amount of the fillers and/or reinforcers of component F added is 10% to 70% by weight, especially 15% to 50% by weight, based on the flame retardant-stabilizer mixture comprising components A to B and optionally C to G.

Component G comprises lubricants and/or demoulding agents. Examples of these are long-chain fatty acids, salts thereof, ester derivatives and/or amide derivatives thereof, montan waxes and/or low molecular weight polyethylene and/or polypropylene waxes.

The preferred amount of component G added is 1% to 30% by weight, especially 5% to 20% by weight, based on the flame retardant-stabilizer mixture comprising components A to B and optionally C to H.

In the flame retardant-stabilizer mixture according to the invention, as well as the obligatory components A and B, at least two of components C, D and/or G are present. Examples of these are combinations of A, B, C and D, of A, B, C and G, or of A, B, D and G.

The flame retardant-stabilizer mixture according to the invention can be used for production of flame-retardant polymer compounds.

The invention therefore also relates to a composition comprising, as well as the abovementioned components A to B and optionally C to H, as further components **I,** a thermoplastic polymer or a mixture thereof.

Components I used with preference are thermoplastic polyesters, thermoplastic polyamides, thermoplastic polyurethanes, thermoplastic-elastomeric polyesters, thermoplastic-elastomeric polyamides or thermoplastic-elastomeric polyurethanes.

The invention also relates to a process for producing flame retardant-stabilizer mixtures according to the invention and the flame-retardant polymer compounds, characterized in that components A to B and optionally C to H, or components A to B and I and optionally C to H, are mixed by melt extrusion in the proportions by weight mentioned.

The invention additionally relates to fibres, films and mouldings produced from the flame-retardant polymer compounds according to the invention.

The invention relates to the use of the fibres, films and mouldings produced from the flame-retardant polymer compounds according to the invention in plugs, switches, capacitors, insulation systems, lamp sockets, coil forms, housings and controls, and other articles.

The invention finally relates to the use of the fibres, films and mouldings produced from the flame-retardant polymer compounds according to the invention in the domestic sector, in industry, in medicine, in motor vehicles, in aircraft, in ships, in office fitout, and in articles and buildings requiring enhanced fire protection.

The thermoplastic polymer (component I) preferably comprises polyesters. Particularly preferred polyesters I include polyalkylene terephthalates derived from alkanediols having 2 to 6 carbon atoms. Among these, preference is given especially to polyethylene terephthalate, polypropylene terephthalate and polybutylene terephthalate, or mixtures of these. Preference is further given to PET and/or PBT containing up to 1% by weight, preferably up to 0.75% by weight, of hexane-1,6-diol and/or 2-methylpentane-1,5-diol as further monomer units.

The viscosity number of the polyesters I is generally in the range from 50 to 220 and preferably from 80 to 160 ml/g (measured in a 0.5% solution in a phenol/o-dichlorobenzene mixture (weight ratio 1:1 at 25°C)) to ISO 1628.

Especially preferred are polyesters wherein the carboxyl end group content is up to 100 meq/kg, preferably up to 40 meq/kg and more preferably less than 20 meq/kg of polyester. Such polyesters may be prepared, for example, by the process of DE-A 44 01 055. The carboxyl end group content is typically determined by titration methods (e.g. potentiometry).

Especially preferred moulding compounds contain, as component I, a mixture of polyesters other than PBT, for example polyethylene terephthalate (PET). The proportion, for example, of the polyethylene terephthalate in the mixture is preferably up to 50% by weight, especially 1.0% to 35% by weight, based on 100% by weight of H.

It is also advantageous to use PET recyclates (also called scrap PET), optionally in a mixture with polyalkylene terephthalates such as PBT.

Recyclates are generally understood to mean:
1) Post-industrial recyclate: this comprises production wastes in polycondensation or processing, for example sprues in the case of processing by injection moulding, startup material in the case of processing by injection moulding or extrusion, or edge cut-off material from extruded sheets or films.
2) Post-consumer recyclate: this comprises plastics articles that are collected and processed after utilization by the end user. By far the dominant articles in terms of volume are blow-moulded PET bottles for mineral water, soft drinks and juices.

Both types of recyclate may take the form either of ground material or pellets. In the latter case, the unprocessed recyclates, after separation and cleaning, are melted and pelletized in an extruder. This usually facilitates handling, free flow and meterability for further processing steps.

The polyesters I are preferably also copolyether esters. Copolyether esters are polymers that are obtained by reacting C₂-C₆ diols with an aromatic dicarboxylic acid and a poly(alkylene oxide) diol. The C₂-C₆ diol is preferably selected from ethylene glycol, propylene glycol, butylene glycol and mixtures thereof, preference being given to butylene glycol. The aromatic dicarboxylic acid is selected from terephthalate, iso-phthalates, and mixtures thereof. The poly(alkylene oxide) diols are preferably selected from poly(ethylene oxide) diol, poly(propylene oxide) diol, poly(tetramethylene oxide) diol ("PTMEG"), and mixtures thereof.

The polymers of component I may also be thermoplastic-elastomeric polyesters. These polyesters are known to those skilled in the art.

The polymers I are preferably polyamides and copolyamides which derive from diamines and dicarboxylic acids and/or from aminocarboxylic acids or the corresponding lactams, such as nylon-2,12, nylon-4, nylon-4,6, nylon-6, nylon-6,6, nylon-6,9, nylon-6,10, nylon-6,12, nylon-6,66, nylon-7,7, nylon-8,8, nylon-9,9, nylon-10,9, nylon-10,10, nylon-11, nylon-12, etc. These are known, for example, by the trade names Nylon^{®}, from DuPont, Ultramid^{®}, from BASF, Akulon^{®} K122, from DSM, Zytel^{®} 7301, from DuPont; Durethan^{®} B 29, from Bayer and Grillamid^{®}, from Ems Chemie.

Also suitable are aromatic polyamides proceeding from m-xylene, diamine and adipic acid; polyamides prepared from hexamethylenediamine and iso- and/or terephthalic acid and optionally an elastomer as a modifier, for example poly-2,4,4-trimethylhexamethyleneterephthalamide or poly-m-phenyleneisophthalamide, block copolymers of the aforementioned polyamides with polyolefins, olefin copolymers, ionomers or chemically bound or grafted elastomers, or with polyethers, for example with polyethylene glycol, polypropylene glycol or polytetramethylene glycol. In addition, EPDM- or ABS-modified polyamides or copolyamides; and polyamides condensed during processing ("RIM polyamide systems").

The polymers of component I may also be thermoplastic-elastomeric polyamides. These polyamides are known to those skilled in the art.

Thermoplastic-elastomeric polyurethane is understood to mean thermoplastic urethane-based elastomers, for example Desmopan^{®} (Bayer).

Particular preference is given in accordance with the invention to using mineral particulate fillers based on talc, wollastonite, kaolin and/or glass fibres as component F.

Especially for applications in which isotropy in terms of dimensional stability and high thermal dimensional stability are required, for example in motor vehicle applications for outer bodywork parts, preference is given to using mineral fillers as component F, especially talc, wollastonite or kaolin.

Component F more preferably comprises glass fibres.

Fibrous or particulate fillers F include carbon fibres, glass fibres, glass beads, amorphous silica, asbestos, calcium silicate, calcium metasilicate, magnesium carbonate, kaolin, chalk, powdered quartz, mica, barium sulfate and feldspar, which are used in amounts of up to 60% by weight, especially up to 50% by weight, based on the total mass of the composition.

Preferred fibrous fillers include carbon fibres and aramid fibres, particular preference being given to glass fibres in the form of E glass. These may be used in the form of ground glass, rovings or chopped glass in the standard commercial forms.

The fibrous fillers, for better compatibility with the thermoplastics, may have been superficially pretreated with a silane compound.

Preferred silane compounds are aminopropyltrimethoxysilane, aminobutyltrimethoxysilane, aminopropyltriethoxysilane, aminobutyltriethoxysilane and the corresponding silanes containing a glycidyl group as substituent X.

The silane compounds are generally used for surface coating in amounts of 0.05% to 5%, preferably 0.5% to 1.5% and especially 0.8% to 1% by weight (based on F).

More preferably, acicular mineral fillers may additionally also be used as component F. Acicular mineral fillers are understood in accordance with the invention to mean a mineral filler having highly pronounced acicular character. An example is acicular wollastonites. The mineral preferably has a length:diameter ratio of 2:1 to 35:1, more preferably of 3:1 to 19:1, most preferably of 4:1 to 12:1. The average particle size of the acicular minerals suitable in accordance with the invention is preferably less than 20 µm, more preferably less than 15 µm, especially preferably less than 10 µm.

The filler and/or reinforcer may optionally have been surface-modified, for example with an adhesion promoter or adhesion promoter system, for example based on silane. However, the pretreatment is not absolutely necessary. Especially in the case of use of glass fibres, in addition to silanes, it is also possible to use polymer dispersions, film formers, branching agents and/or glass fibre processing auxiliaries.

As a result of the processing to give the moulding compound or moulding, the particulate fillers may have a smaller d₉₀ or d₅₀ in the moulding compound or in the moulding than the fillers originally used. As a result of the processing to give the moulding compound or moulding, the glass fibres may have shorter length distributions in the moulding compound or in the moulding than as originally used.

In a further alternative preferred embodiment, the moulding compounds, in addition to components A to F, may comprise at least one lubricant and demoulding agent as further additive G. Suitable examples for this purpose are long-chain fatty acids (e.g. stearic acid or behenic acid), salts thereof (e.g. calcium stearate or zinc stearate) and ester derivatives or amide derivatives thereof (e.g. ethylenebisstearylamide), montan waxes (mixtures of straight-chain saturated carboxylic acids having chain lengths of 28 to 32 carbon atoms), and low molecular weight polyethylene or polypropylene waxes. Preference is given in accordance with the invention to using lubricants and/or demoulding agents from the group of the low molecular weight polyethylene waxes and the esters of saturated or unsaturated aliphatic carboxylic acids having 8 to 40 carbon atoms with aliphatic saturated alcohols having 2 to 40 carbon atoms, very particular preference being given to pentaerythritol tetrastearate (PETS).

Further possible additives H are, for example, further stabilizers (for example UV stabilizers), antistats, further flame retardants, emulsifiers, nucleating agents, plasticizers, processing auxiliaries, impact modifiers, dyes and pigments. The further additives H may be used alone or in a mixture or in the form of masterbatches, or may be mixed into the melt in advance of component I or applied to the surface thereof.

Further stabilizers used may, for example, be hydroquinones, aromatic secondary amines such as diphenylamines, substituted resorcinols, salicylates, benzotriazoles and benzophenones, and variously substituted representatives of these groups and mixtures thereof.

Suitable UV stabilizers include various substituted resorcinols, salicylates, benzotriazoles and benzophenones.

Impact modifiers (elastomer modifiers, modifiers) are quite generally copolymers that are preferably formed from at least two of the following monomers: ethylene, propylene, butadiene, isobutene, isoprene, chloroprene, vinyl acetate, styrene, acrylonitrile and acrylic and methacrylic esters having 1 to 18 carbon atoms in the alcohol component.

It is possible to add inorganic pigments such as titanium dioxide, ultramarine blue, iron oxide, zinc sulfide and carbon black, and also organic pigments such as phthalocyanines, quinacridones, perylenes, and dyes such as nigrosin and anthraquinones as colourants, and also other colourants. In the context of the present invention, preference is given to the use of carbon black.

Nucleating agents used may, for example, be sodium phenylphosphinate or calcium phenylphosphinate, aluminium oxide or silicon dioxide, and preferably talc.

Processing auxiliaries used may, for example, be copolymers of at least one α-olefin with at least one methacrylic ester or acrylic ester of an aliphatic alcohol. Preference is given here to copolymers in which the α-olefin has been formed from ethene and/or propene and the methacrylic ester or acrylic ester contains linear or branched alkyl groups having 4 to 20 carbon atoms as alcohol component. Particular preference is given to butyl acrylate and 2-ethylhexyl acrylate.

Examples of plasticizers include dioctyl phthalate, dibenzyl phthalate, butyl benzyl phthalate, hydrocarbon oils and N-(n-butyl)benzenesulfonamide.

Components A to B and optionally C to H may be incorporated into thermoplastic polymers, for example by premixing all constituents as powder and/or pellets in a mixer, and then homogenizing them in the polymer melt in a compounding apparatus (for example a twin-screw extruder). The melt is typically extruded, cooled and pelletized. Individual components may also be introduced directly into the compounding apparatus separately via a metering unit.

It is likewise possible to add additions A to B and optionally C to H to finished polymer pellets or powder and to process the mixture directly in an injection moulding machine to give shaped articles.

The flame-retardant polymer compounds are suitable for producing mouldings, films, filaments and fibres, for example by injection moulding, extruding or pressing.

### Examples

### 1. Components used

Thermoplastic polymers, component I:
   polybutylene terephthalate (PBT): Ultradur^{®} 4500 (BASF, D)
Thermoplastic copolyether ester elastomers (TPC):
   Riteflex^{®} 655 TPC unfilled (Celanese, Shore D hardness 55), referred to as TPC-55
   Riteflex^{®} 440 TPC unfilled (Celanese, Shore D hardness 40)
   Nylon-6,6: Ultramid^{®} A27, BASF
   TPU: Elastollan^{®} 1185, BASF
Component A:
   aluminium salt of diethylphosphinic acid, referred to hereinafter as DEPAL.
Component B:
   Stabaxol^{®} P, polymeric carbodiimide, melting range 50-60°C, Lanxess
   Stabaxol^{®} P100, high molecular weight carbodiimide, melting range 75-85°C, Lanxess
   Stabaxol^{®} P110, high molecular weight carbodiimide, melting range 60-70°C, Lanxess
   Stabaxol^{®} PLF, polymeric carbodiimide without monomer components, Lanxess
   Lubio^{®} AS 3, polymeric carbodiimide, Schäfer Additivsysteme, referred to as AS 3
   Lubio^{®} AS 18, high molecular weight polymeric carbodiimide, Schäfer Additivsysteme, referred to as AS 18
Component C:
   Irganox^{®} 1010 (pentaerythritol tetrakis(3-(3,5-di-tert-butyl-4-hydroxyphenyl)propionate), from BASF, referred to as sterically hindered phenol
   Irganox^{®} 1330 (3,3',3',5,5',5'-hexa-tert-butyl-a,a',a'-(mesitylene-2,4,6-triyl)tri-p-cresol), from BASF, referred to as sterically hindered phenol
   Irganox^{®}245 ethylenebis(oxyethylene) bis(3-(5-tert-butyl-4-hydroxy-m-tolyl)propionate), referred to as sterically hindered phenol
Component E:
   Melapur^{®} MC 50 (melamine cyanurate), from BASF, referred to as MC
   Melapur^{®} 200/70 (melamine polyphosphate = MPP), BASF, referred to as MPP Delflam 20 (melem), Delamin, UK, referred to as melem
Component F:
   PPG HP 3610 EC 10 4.5 mm glass fibres
   PPG HP 3786 EC 10 4.5 mm glass fibres, from Nippon Electric Glass, NL
Component G:
   Lubricant: Licowax^{®} E, montan wax, from Clariant, CH

### Comparator

Araldite GT 7072; from Huntsman, CH, referred to as epoxide
Lotader AX8900, from Arkema, impact modifier based on ethylene-methyl acrylate-glycidyl methacrylate terpolymer, referred to as AX 8900

### 2. Production, processing and testing of flame-retardant polyester, polyamide and polyurethane compounds

The flame-retardant components were mixed with the polymer pellets and any additives in the ratio specified in the tables and incorporated in a twin-screw extruder (Leistritz ZSE 27/HP-44D) at temperatures of 240 to 280°C. The homogenized polymer strand was drawn off, cooled in a water bath, and then pelletized.

After sufficient drying, the moulding compounds were processed in an injection moulding machine (Arburg 320C/KT) at melt temperatures of 260 to 280°C to give test specimens. The flame retardancy of the moulding compounds was tested by method UL94V (Underwriters Laboratories Inc. Standard of Safety, "Test for Flammability of Plastic Materials for Parts in Devices and Appliances", page 14 to page 18, Northbrook 1998).

The fire tests were conducted by the UL 94 vertical test. The UL 94 fire classifications are as follows:

| | |
|---|---|
| V-0: | afterflame time never longer than 10 sec, total of afterflame times for 10 flame applications not more than 50 sec, no flaming drops, no complete consumption of the specimen, afterglow time for specimens never longer than 30 sec after end of flame application |
| V-1: | afterflame time never longer than 30 sec after end of flame application, total of afterflame times for 10 flame applications not more than 250 sec, afterglow time for specimens never longer than 60 sec after end of flame application, other criteria as for V-0 |
| V-2: | cotton indicator ignited by flaming drops, other criteria as for V-1 |

| | |
|---|---|
| not classifiable (ncl): does not comply with fire classification V-2. | |

The examples report the afterflame time for 10 flame applications to 5 test specimens.

The determination of the hydrolysis stability was conducted with a CertoClav MultiControl 2 (laboratory autoclave) from CertoClav Sterilizer GmbH. The purpose of storing the sample in an autoclave was to test the degradation of the material as a result of high temperatures and high moisture content. The test specimens are preferably produced by injection moulding. The number of test specimens is guided by the tests required and the number of samplings envisaged, if any. Hydrolysis stability was tested in accordance with DIN EN 60749-33, i.e. heated storage under pressure in 100% relative humidity at 121°C and 1 barg.

In addition, hydrolysis stability was also determined by storage of standard tensile specimens in a climate-controlled cabinet at 85°C and 85% relative air humidity for 40 days. The crucial figures are the mechanical values before and after the hydrolysis test, and retention of the values after storage in per cent.

Tensile properties were determined with a Z 010 tensile tester (from Zwick) according to DIN EN ISO 527-1/-2/-3. The method is used in order to examine the tensile deformation characteristics of test specimens and to ascertain the tensile strength, tensile modulus and other features of the tensile stress/strain relationship under fixed conditions. The test specimens are preferably produced by injection moulding. The number of test specimens is guided by the tests required. For the sample preparation, the test specimens are stored at 23°C/50% rel. humidity in a climate-controlled room for at least 16 h. Polyamide test specimens and other test specimens having high water absorption must be stored in a bag with an airtight seal at 23°C and 50% rel. humidity for at least 24 h. The test specimen is stretched along its greatest principal axis at constant speed until it breaks or until the stress (force) or strain (change in length) reaches a defined value; during this operation, the stress borne by the test specimen and the change in length are measured. The measurement is effected in a climate-controlled room at 23°C and 50% rel. humidity.

### Examples of polyester elastomers

**Table 1: Thermoplastic polyester elastomer: Stretching in freshly injection-moulded form and after a pressure cooker test (121°C, 1 barg) for 3 days; B1-2 are inventive examples**

| | | V1 | B1 | B2 |
|---|---|---|---|---|
| TPC-55 | | 83.0 | 81.0 | 81.0 |
| DepAl | | 12 | 12 | 12 |
| MC | | 4.5 | 4.5 | 4.5 |
| Stabaxol P | | | 2 | |
| Stabaxol P100 | | | | 2 |
| Irganox^{®} 1010 | | 0.3 | 0.3 | 0.3 |
| Licowax E | | 0.2 | 0.2 | 0.2 |
| UL94 0.8 mm | | V-2 | V-2 | V-2 |
| AFT / s | | 14 | 32 | 26 |
| Cotton bud burns / burning and non-burning droplets | | 5 / 15 | 5 / 12 | 5 / 15 |
| Elongation (at break) / % | T0* | 352 | 343 | 306 |
| | T3* | 16 | 252 | 228 |
| Retention (break) after 3 days* / % | | 4 | 74 | 75 |
| Elongation (max) / % | T0* | 100 | 100 | 100 |
| | T3* | 5 | 71 | 72 |
| Modulus of elasticity (MPa) | T0* | 184 | 180 | 184 |
| | T3* | 157 | 164 | 186 |

| | | | | |
|---|---|---|---|---|
| *0 = freshly injection-moulded, *3 = after storage in the PCT laboratory autoclave for 3 days (121°C, 1 barg) | | | | |

Table 1 shows that flame-retardant thermoplastic elastomers can be obtained using DepAl, MC, polymeric carbodiimides, sterically hindered phenols and lubricants. The addition of carbodiimide, sterically hindered phenol and lubricants does not impair flame retardancy. After exposure in an autoclave for three days (pressure cooker test, 121°C, 1 barg), retention of up to 75% of the elongation at break is still found. No increase in pressure and no formation of gas or odour was observed on compounding.

### PBT examples

**Table 2: PBT GF 25 compounds: Stretching in freshly injection-moulded form and comparison after storage in a climate-controlled cabinet (85°C/85% rel. hum., 40 days) vs. pressure cooker test (PCT, 121°C, 1 barg, 3 days); B3 is an inventive example**

| | | | V2 | V3 | V4 | B3 | V5 | V6 | V7 | V8 |
|---|---|---|---|---|---|---|---|---|---|---|
| | PBT | | 74.4 | 72.4 | 54.4 | 53.4 | 52.4 | 53.4 | 51.4 | 52.4 |
| | Glass fibres | | 25 | 25 | 25 | 25 | 25 | 25 | 25 | 25 |
| | DepAl | | | | 13.3 | 13.3 | 13.3 | 13.3 | 13.3 | 13.3 |
| | MC | | | | 6.7 | 6.7 | 6.7 | 6.7 | 6.7 | 6.7 |
| | Licowax E | | 0.3 | 0.3 | 0.3 | 0.3 | 0.3 | 0.3 | 0.3 | 0.3 |
| | Lubio AS 3 | | | | | 1 | | | | |
| | Epoxide | | | 2 | | | 2 | 1 | 3 | |
| | AX 8900 | | | | | | | | | 2 |
| | Irganox^{®} 1010 | | 0.3 | 0.3 | 0.3 | 0.3 | 0.3 | 0.3 | 0.3 | 0.3 |
| | UL94 0.8 mm | | burnt | burnt | V-0 | V-0 | V-1 | V-1 | V-1 | V-1 |
| | AFT / s | | - | - | 47 | 22 | 96 | 83 | 119 | 87 |
| Climate-controlled cabinet (85°C/ 85% rel. hum./ 40 days) | Elongation (at break) / % | T0* | 3.1 | 3.08 | 2.35 | 2.27 | 1.61 | 1.95 | 1.16 | 2.36 |
| | | T40* | 1.67 | 2.40 | 0.79 | 1.99 | 0.71 | 0.79 | 0.59 | 0.87 |
| | Retention (break) after 40 days / % | | 54 | 78 | 34 | 88 | 44 | 41 | 51 | 37 |
| | Tensile strength (break) / N/mm² | T0* | 121 | 133 | 105 | 111 | 102 | 106 | 90 | 102 |
| | | T40* | 96 | 119 | 57 | 98 | 56 | 63 | 53 | 59 |
| | Modulus of elasticity (MPa) | T0* | 8364 | 8925 | 9851 | 10029 | 10272 | 9976 | 10377 | 9377 |
| | | T40* | 7882 | 8463 | 9140 | 9551 | 9637 | 9400 | 9699 | 8806 |
| PCT (121°C/ 100% rel. hum./ 3 days) | Elongation (at break) / % | T0* | 3.1 | 3.08 | 2.4 | 2.27 | 1.61 | 1.95 | 1.16 | 2.36 |
| | | T3* | 1.3 | 2.3 | 0.7 | 1.43 | 0.67 | 0.56 | 0.4 | 0.58 |
| | Retention (break) after 3 days / % | | 42 | 75 | 29 | 63 | 42 | 29 | 34 | 25 |
| | Tensile strength (break) / N/mm² | T0* | 121 | 133 | 105 | 111 | 102 | 106 | 90 | 102 |
| | | T3* | 70 | 114 | 53 | 79 | 54 | 48 | 38 | 44 |
| | Modulus of elasticity (MPa) | T0* | 8364 | 8925 | 9851 | 10029 | 10272 | 9976 | 10377 | 9377 |
| | | T3* | 7609 | 8050 | 8724 | 8866 | 9368 | 9118 | 9301 | 8430 |

| | | | | | | | | | | |
|---|---|---|---|---|---|---|---|---|---|---|
| *0 = freshly injection-moulded, *3 = after storage in the PCT laboratory autoclave for 3 days (121°C, 1 barg), *40 = after 40 days in climate-controlled cabinet at 85°C and 85% relative air humidity | | | | | | | | | | |

Table 2 shows that flame-retardant and hydrolysis-stable PBT compounds can be produced using DepAl, MC, glass fibres, sterically hindered phenols, high molecular weight carbodiimide and lubricants. The UL94 fire classes are improved by the addition of polymeric carbodiimide. After storage in a climate-controlled cabinet at 85°C and 85% relative air humidity for 40 days, elongation at break of 88% is still obtained with the flame-retardant polyester according to the invention. This elongation at break is very substantially comparable to the storage of the flame-retardant polyester for 2 to 3 days in an autoclave at 121°C and 1 barg. The autoclave can thus be considered to be a rapid hydrolysis test with the PCT conditions. No increase in pressure and no formation of gas or odour was observed on compounding.

**Table 3: PBT GF 25 V-0 compounds with and without hydrolysis stabilization. Tensile test before and after storage at 121°C in an autoclave for 3 days; B4-7 are inventive examples; V4 was compounded once again for comparison**

| | | V4 | B4 | B5 | V9 | B6 | B7 |
|---|---|---|---|---|---|---|---|
| PBT | | 54.4 | 53.4 | 53.4 | 53.7 | 53.4 | 53.4 |
| Glass fibres | | 25 | 25 | 25 | 25 | 25 | 25 |
| DepAl | | 13.3 | 13.3 | 13.3 | 13.3 | 13.3 | 13.3 |
| MC | | 6.7 | 6.7 | 6.7 | 6.7 | 6.7 | 6.7 |
| Licowax E | | 0.3 | 0.3 | 0.3 | 0.3 | 0.3 | 0.3 |
| Stabaxol P Mw=3000 | | | 1 | | | | |
| Stabaxol P100 Mw=15000 | | | | 1 | 1 | | |
| Stabaxol P110 Mw=3000 | | | | | | 1 | |
| Stabaxol PLF Mw=4000 | | | | | | | 1 |
| Irganox^{®} 1010 | | 0.3 | 0.3 | 0.3 | 0 | 0.3 | 0.3 |
| UL94 0.8 mm | | V-0 | V-0 | V-0 | V-0 | V-2 | V-0 |
| Elongation (at break) / % | T0* | 2.4 | 2.16 | 2.22 | 2.22 | 1.99 | 2.09 |
| | T3* | 0.7 | 1.72 | 1.84 | 1.65 | 1.53 | 1.78 |
| Retention (break) after 3 days* / % | | 29 | 80 | 83 | 74 | 77 | 85 |
| Tensile strength (break) / N/mm² | T0* | 105 | 105 | 108 | 108 | 107 | 104 |
| | T3* | 53 | 85 | 86 | 79 | 82 | 84 |
| Modulus of elasticity (MPa) | T0* | 9851 | 10269 | 10332 | 10291 | 10064 | 10224 |
| | T3* | 8724 | 8987 | 8980 | 8876 | 8693 | 8938 |

| | | | | | | | |
|---|---|---|---|---|---|---|---|
| *0 = freshly injection-moulded, *3 = after storage in the PCT laboratory autoclave for 3 days (121°C, 1 barg) | | | | | | | |

Table 3 shows that flame-retardant thermoplastic polyesters can be produced using DepAl, MC, glass fibres, sterically hindered phenols, carbodiimides having different molecular weights and lubricants, the highest retentions being achieved with the carbodiimides having molecular weights of > 3000 g/mol. The UL94 fire classes are preserved or improved to a crucial degree through the addition of carbodiimide, sterically hindered phenol and lubricants. After storage in an autoclave at 121°C and 1 barg for 3 days, elongations at break of nearly 80% were obtained in the case of flame-retardant polyesters that additionally contain carbodiimide. No increase in pressure and no formation of gas or odour was observed on compounding.

**Table 4: PBT GF 25 V-0 compounds with and without hydrolysis stabilization. Tensile test in freshly injection-moulded form before and after storage at 121°C in an autoclave for 3 days; B8 is an inventive example**

| | | V4 | V10 | B8 |
|---|---|---|---|---|
| PBT | | 54.4 | 54.4 | 53.4 |
| Glass fibres | | 25 | 25 | 25 |
| DepAl | | 13.3 | 13.3 | 13.3 |
| MC | | 6.7 | | |
| Melem | | | 6.7 | 6.7 |
| Licowax E | | 0.3 | 0.3 | 0.3 |
| Lubio AS3 | | | | 1 |
| Irganox^{®} 1010 | | 0.3 | 0.3 | 0.3 |
| UL94 0.8 mm | | V-0 | V-0 | V-0 |
| AFT / s | | 47 | 34 | 30 |
| Elongation (at break) / % | T0* | 2.4 | 2.21 | 2.22 |
| | T3* | 0.7 | 0.46 | 1.26 |
| Retention (break) after 3 days* / % | | 29 | 21 | 57 |
| Tensile strength (break) / N/mm² | T0* | 105 | 104 | 110 |
| | T3* | 53 | 39 | 78 |
| Modulus of elasticity (MPa) | T0* | 9851 | 9597 | 9813 |
| | T3* | 8724 | 8941 | 9273 |

| | | | | |
|---|---|---|---|---|
| *0 = freshly injection-moulded, *3 = after storage in the PCT laboratory autoclave for 3 days (121°C, 1 barg) | | | | |

Table 4 shows that flame-retardant thermoplastic polyesters can be produced using DepAl, melem, glass fibres, sterically hindered phenols, high molecular weight carbodiimide and lubricants. The UL94 fire classes are preserved through the addition of carbodiimide, sterically hindered phenol and lubricants. After storage in an autoclave at 121°C and 1 barg for 3 days, elongations at break of nearly 60% are still obtained in the case of flame-retardant polyesters that additionally include carbodiimide and sterically hindered phenols. No increase in pressure and no formation of gas or odour was observed on compounding.

### Examples of nylon-6

**Table 5: PA6GF30: Stretching in freshly injection-moulded form and after a pressure cooker test (121°C, 1 barg) for 4 days. B9 is a reference example.**

| | | V11 | V12 | B9 |
|---|---|---|---|---|
| PA 6 | | 69.7 | 49.7 | 49.2 |
| Glass fibres | | 30 | 30 | 30 |
| Exolit OP 1400 (TP) | | | 20 | 20 |
| Lubio AS 18 | | | | 0.5 |
| Irganox^{®} 245 | | 0.3 | 0.3 | 0.3 |
| UL94 0.8 mm | | n.c. | V-0 | V-0 |
| Elongation (at break) / % | T0 | 4.7 | 3.4 | 3.4 |
| | T1* | 8.4 | 6.7 | 7.4 |
| | T4* | 7.3 | 4.8 | 5.7 |
| Retention (break) after 4 days in comparison to 1 day (saturation)* / % | | 87 | 71 | 77 |
| Tensile strength (break) / N/mm² | T0 | 161 | 136 | 131 |
| | T4* | 90 | 71 | 68 |
| Modulus of elasticity (MPa) | T0 | 9001 | 10843 | 10683 |
| | T4* | 3952 | 5273 | 5000 |

| | | | | |
|---|---|---|---|---|
| *0 = freshly injection-moulded, *1 or 4 = after storage in the PCT laboratory autoclave for 1 or 4 days (121°C, 1 barg) | | | | |

Table 5 shows that flame-retardant thermoplastic polyamides can be produced using Exolit OP 1400, glass fibres, sterically hindered phenols, polymeric carbodiimide and lubricants. The UL94 fire classes are very substantially preserved through the addition of polymeric carbodiimide, sterically hindered phenol and lubricants. After storage in an autoclave at 121°C and 1 barg (PCT) for 4 days, elongation at break of 77% is still obtained. It should be noted here that the zero value of elongation on day 1 was taken after water storage, since saturation is established only after 24 hours. No increase in pressure and no formation of gas or odour was observed on compounding.

### TPU examples

**Table 6: TPU V-0 compounds with and without hydrolysis stabilization. Tensile strength before and after storage at 85°C in water for 7 days. B10 is a reference example and B11 is an inventive example.**

| | V13 | V14 | B10 | V15 | B11 |
|---|---|---|---|---|---|
| TPU | 99.7 | 84.5 | 83.5 | 69.5 | 69.0 |
| DepAl | | 15 | 15 | 15 | 15 |
| MC | | | | 15 | 15 |
| Lubio AS 3 | | | 1 | | 0.5 |
| Irganox^{®} 1330 | 0.3 | 0.3 | 0.3 | 0.3 | 0.3 |
| Licowax E | | 0.2 | 0.2 | 0.2 | 0.2 |
| Tensile strength / N/mm² | 44.0 | 21.3 | 21.7 | 11.4 | 12.4 |
| TS after 7 d* | 33.5 | 15.6 | 17.5 | 8.7 | 10.0 |
| Retention / % | 81 | 73 | 81 | 73 | 81 |
| UL 94 1.6 mm | burnt | V-1 | V-1 | V-0 | V-0 |
| UL 94 1.6 mm after 7 d* | burnt | V-2 | V-1 | V-1 | V-0 |

| | | | | | |
|---|---|---|---|---|---|
| *after storage in water at 85°C for 7 days | | | | | |

Table 6 shows that flame-retardant thermoplastic polyurethanes that still have more than 80% retention of tensile strength after storage in water at 85°C for seven days can be obtained using DepAl, MC, sterically hindered phenols, high molecular weight carbodiimide and lubricants. No gas formation and no odour are observed on compounding, and the test specimens do not show any discolouration. The UL94 fire classes are preserved by the addition of the high molecular weight carbodiimides, the sterically hindered phenols and the lubricants, whereas a deterioration in fire class is observed without addition of carbodiimide.

## Claims

1. Mixtures comprising
- as component A 10% to 80% by weight of a phosphinic salt of the formula (Ia), a diphosphinic salt of the formula (Ib), or polymers or mixtures of two or more thereof, 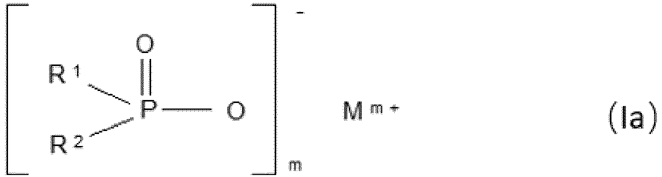 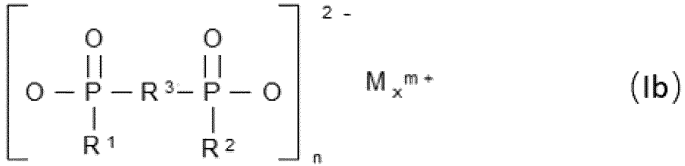 in which
R¹, R² are the same or different and are H or C₁-C₆-alkyl, linear or branched, and/or aryl,
R³ is C₁-C₁₀-alkylene, linear or branched, C₆-C₁₀-arylene, -alkylarylene or -arylalkylene,
M is H, Mg, Ca, Al, Sb, Sn, Ge, Ti, Fe, Zn, Zr, Ce, Bi, Sr, Mn, Li, Na, K and/or a protonated nitrogen base,
m is 1 to 4,
n is 1 to 4, and
x is 1 to 4,
- as component B 0.5% to 20% by weight of a polymeric carbodiimide compound or mixtures thereof,
- as component C 0.5% to 20% by weight of a sterically hindered phenol or mixtures thereof,
- as component D 0% to 20% by weight of an organic phosphite and/or organic phosphonite or mixtures thereof,
- as component E 10% to 40% by weight of a condensation product of melamine;
- as optional component F 10% to 70% by weight of a filler or reinforcer or mixtures thereof,
- as component G 1% to 30% by weight of a lubricant and/or demoulding agent or mixtures thereof,
- as component H 0% to 40% by weight of further additives other than components A to G,
where the sum total of the weight components is 100% by weight.

2. Mixtures according to Claim 1, **characterized in that** R¹, R² are identical or different and are methyl, ethyl, n-propyl, isopropyl, n-butyl, tert-butyl, n-pentyl and/or phenyl.

3. Mixtures according to at least one of Claims 1 and 2, **characterized in that** R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

4. Mixtures according to at least one of Claims 1 to 3, **characterized in that** polymeric -N=C=N-containing compounds of component B are compounds of the general formula (II) or (III) 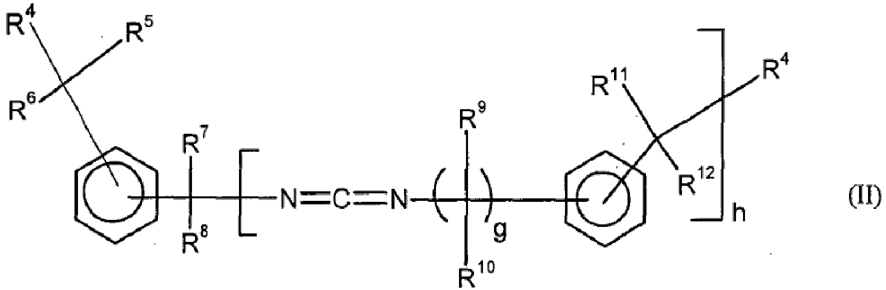 where
R⁴ is NCO,
R⁵, R⁶, R⁷, R⁸, R⁹, R¹⁰, R¹¹ and R¹²
are independently hydrogen, or a radical from the group of C₁- to C₁₀-alkyl, C₆- to C₁₂-aryl, C₇- to C₁₃-aralkyl or C₇- to C₁₃-alkylaryl,
g is an integer from 0 to 5,
h is an integer from 2 to 100; 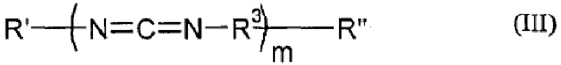
where, in formula (III),
m is an integer from 2 to 5000, preferably an integer from 2 to 500,
R³ is an arylene radical, preferably a 4,4'-methylenebis(2,6-dialkylphenyl) radical that bears, in at least one ortho position, preferably in both ortho positions, to the aromatic carbon atom that bears the -N=C=N- group, aliphatic and/or cycloaliphatic substituents having at least 2 carbon atoms, preferably branched or cycloaliphatic radicals having at least 3 carbon atoms,
R' is aryl, aralkyl, aryl-NCO or aralkyl-NCO and
R" is -N=C=N-aryl, -N=C=N-aralkyl or -NCO.

5. Mixtures according to Claim 4, **characterized in that** component B comprises N=C=N-containing compounds of the formula (IV) or (V) 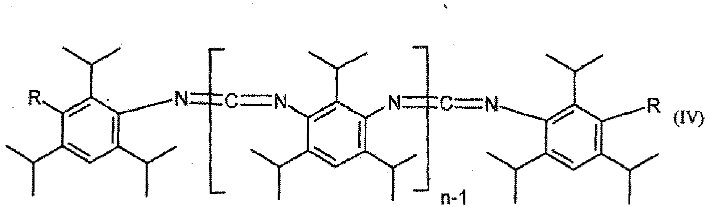 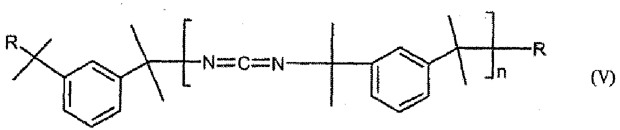 where
R is =NCO
in which
n is an integer from 2 to 200.

6. Mixtures according to at least one of Claims 1 to 5, **characterized in that** component C is selected from the group consisting of alkylated monophenols, sterically hindered alkylthiomethylphenols, sterically hindered hydroxylated thiodiphenyl ethers, sterically hindered alkylidenebisphenols, sterically hindered benzylphenols, sterically hindered hydroxybenzylated malonates, sterically hindered hydroxybenzylaromatics, sterically hindered phenolic triazine compounds, sterically hindered phenolic benzyl phosphonates, alkyl N-(3,5-di-tert-butyl-4-hydroxyphenyl)carbamates, esters of β-(3,5-di-tert-butyl-4-hydroxyphenyl)propionic acid with mono- or polyhydric alcohols, esters of β-(5-tert-butyl-4-hydroxy-3-methylphenyl)propionic acid with mono- or polyhydric alcohols, esters of β-(3,5-dicyclohexyl-4-hydroxyphenyl)propionic acid with mono- or polyhydric alcohols, esters of 3,5-di-tert-butyl-4-hydroxyphenylacetic acid with mono- or polyhydric alcohols, amides of β-(3,5-di-tert-butyl-4-hydroxyphenyl)propionic acid and mixtures of two or more of these.

7. Mixtures according to at least one of Claims 1 to 6, **characterized in that** component D is selected from the group consisting of organic phosphites of the general formula P(OR)₃ in which R are monovalent organic radicals, organic phosphonites of the general formula PR'(OR)₂ in which R and R' are monovalent organic radicals.

8. Mixtures according to at least one of Claims 1 to 7, **characterized in that** component F is selected from the group consisting of mineral particulate fillers based on talc, mica, silicate, quartz, titanium dioxide, wollastonite, kaolin, amorphous silicas, magnesium carbonate, chalk, feldspar and/or barium sulfate and/or glass fibres.

9. Mixtures according to at least one of Claims 1 to 8, **characterized in that** component G is selected from the group consisting of long-chain fatty acids, salts thereof, ester derivatives and/or amide derivatives thereof, montan waxes and/or low molecular weight polyethylene and/or polypropylene waxes.

10. Compositions comprising, as well as the mixtures according to at least one of Claims 1 to 9, as further components I, a thermoplastic polymer or a mixture thereof, preferably thermoplastic polyesters, thermoplastic polyamides, thermoplastic polyurethanes, thermoplastic-elastomeric polyesters, thermoplastic-elastomeric polyamides and/or thermoplastic-elastomeric polyurethanes.

11. Compositions according to Claim 10, **characterized in that** component E is melem.

12. Compositions according to at least one of Claims 10 and 11, **characterized in that** component F comprises mineral particulate fillers based on talc, mica, silicate, quartz, titanium dioxide, wollastonite, kaolin, amorphous silicas, magnesium carbonate, chalk, feldspar and/or barium sulfate and/or glass fibres.

13. Compositions according to Claim 12, **characterized in that** component F comprises glass fibres.

14. Compositions according to at least one of Claims 10 to 13, **characterized in that** component I comprises PBT or thermoplastic-elastomeric polyesters.

15. Compositions according to at least one of Claims 10 to 14, **characterized in that** component G comprises long-chain fatty acids, salts thereof, ester derivatives and/or amide derivatives thereof, montan waxes and/or low molecular weight polyethylene and/or polypropylene waxes.

16. Process for producing hydrolysis-stable and flame-retardant polymer compounds, **characterized in that** components A to I according to at least one of Claims 1 to 15 are mixed by melt extrusion in the proportions by weight specified.

17. Fibres, films, mouldings and shaped articles made from hydrolysis-stable and flame-retardant polymer compounds according to at least one of Claims 10 to 15.

18. Use of fibres, films and mouldings made from hydrolysis-stable and flame-retardant polymer compounds according to at least one of Claims 10 to 15 in plugs, switches, capacitors, insulation systems, lamp sockets, coil forms, housings, controls and other articles.

19. Use of fibres, films, mouldings and shaped articles made from hydrolysis-stable and flame-retardant polymer compounds according to at least one of Claims 10 to 15 in the domestic sector, in industry, in medicine, in motor vehicles, in aircraft, in ships, in spacecraft and in other means of locomotion, in office fitout, and in other articles and buildings.

## Patentansprüche

1. Mischungen, die Folgendes enthalten
- als Komponente A 5 bis 80 Gew.-% eines Phosphinsalzes der Formel (la), eines Diphosphinsalzes der Formel (Ib) oder Polymere oder Mischungen aus zwei oder mehr davon, 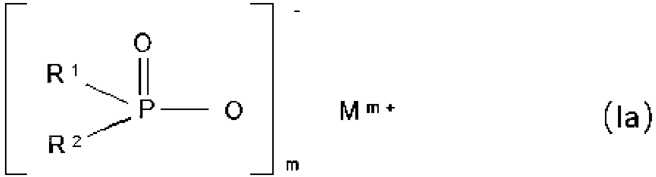 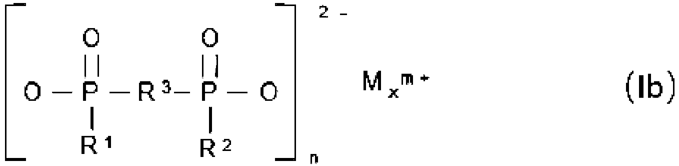 wobei
R¹ , R² gleich oder verschieden sind und H oder C₁ -C₆ -Alkyl, linear oder verzweigt, und/oder Aryl bedeuten,
R³ C₁-C₁₀-Alkylen, linear oder verzweigt, C₆-C₄₀-Arylen, -Alkylarylen oder -Arylalkylen ist,
M ist H, Mg, Ca, Al, Sb, Sn, Ge, Ti, Fe, Zn, Zr, Ce, Bi, Sr, Mn, Li, Na, K und/oder eine protonierte Stickstoffbase,
m ist 1 bis 4,
n ist 1 bis 4 und
x ist 1 bis 4,
- als Komponente B 0,5 bis 20 Gew.-% einer polymeren Carbodiimidverbindung oder Mischungen davon,
- als Komponente C 0,5 bis 20 Gew.-% eines sterisch gehinderten Phenols oder Mischungen davon,
- als Komponente D 0 bis 20 Gew.-% eines organischen Phosphits und/oder organischen Phosphonits oder Mischungen davon,
- als Komponente E 10 bis 40 Gew.-% eines Kondensationsprodukts von Melamin;
- als Komponente F 10 bis 70 Gew.-% eines Füllstoffs oder Verstärkungsmittels oder Mischungen davon,
- als Komponente G 1 bis 30 Gew.-% eines Gleitmittels und/oder Trennmittels oder Mischungen davon,
- als Komponente H 0 bis 40 Gew.-% weiterer Additive, die nicht zu den Komponenten A bis G gehören,
wobei die Summe der Gewichtsanteile 100 Gew.-% beträgt.

2. Mischungen nach Anspruch 1, **dadurch gekennzeichnet, dass** R¹ , R² gleich oder verschieden sind und Methyl, Ethyl, n-Propyl, Isopropyl, n-Butyl, tert-Butyl, n-Pentyl und/oder Phenyl bedeuten.

3. Gemische gemäß mindestens einem der Ansprüche 1 und 2, **dadurch gekennzeichnet, dass** R³ Methylen, Ethylen, n-Propylen, Isopropylen, n-Butylen, tert-Butylen, n-Pentylen, n-Octylen oder n-Dodecylen ist; Phenylen oder Naphthylen; Methylphenylen, Ethylphenylen, tert-Butylphenylen, Methylnaphthylen, Ethylnaphthylen oder tert-Butylnaphthylen; Phenylmethylen, Phenylethylen, Phenylpropylen oder Phenylbutylen.

4. Mischungen gemäß mindestens einem der Ansprüche 1 bis 3, **dadurch gekennzeichnet, dass** die polymeren -N=C=N-haltigen Verbindungen der Komponente B Verbindungen der allgemeinen Formel (II) oder (III) sind 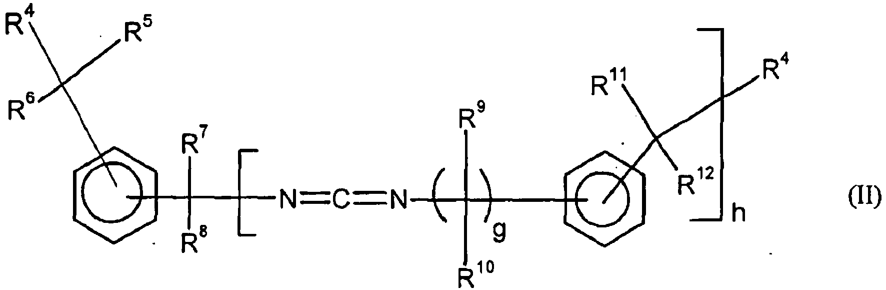 wobei
R⁴ für NCO steht,
R⁵ , R⁶ , R⁷, R⁸ , R⁹ , R¹⁰ , R¹¹ und R¹²
unabhängig voneinander Wasserstoff oder ein Rest aus der Gruppe C₁- bis C₁₀-Alkyl, C₆- bis C₁₂-Aryl, C₇- bis C₁₃-Aralkyl oder C₇- bis C₁₃-Alkylaryl sind,
g eine ganze Zahl von 0 bis 5 ist,
h eine ganze Zahl von 2 bis 100 ist; 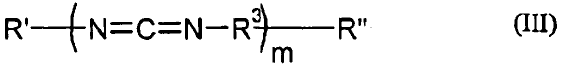
wobei in Formel (III)
m eine ganze Zahl von 2 bis 5000, vorzugsweise eine ganze Zahl von 2 bis 500,
R³ ein Arylengruppenrest ist, vorzugsweise ein 4,4'-Methylenbis(2,6-dialkylphenyl)-Rest, der in mindestens einer ortho-Position, vorzugsweise in beiden ortho-Positionen, an das aromatische Kohlenstoffatom gebunden ist, das die -N=C=N-Gruppe, e aliphatische und/oder cycloaliphatische Substituenten mit mindestens 2 Kohlenstoffatomen, vorzugsweise verzweigte oder cycloaliphatische Reste mit mindestens 3 Kohlenstoffatomen,
R' Aryl, Aralkyl, Aryl-NCO oder Aralkyl-NCO und
R" ist -N=C=N-Aryl, -N=C=N-Aralkyl oder -NCO.

5. Gemische nach Anspruch 4, **dadurch gekennzeichnet, dass** Komponente B N=C=N-haltige Verbindungen der Formel (IV) oder (V) umfasst 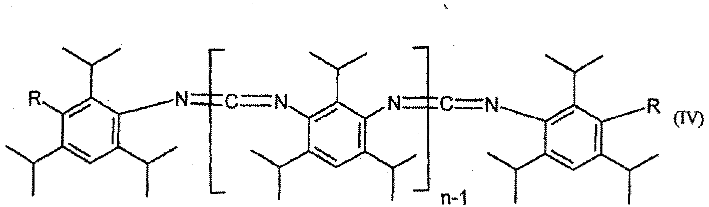 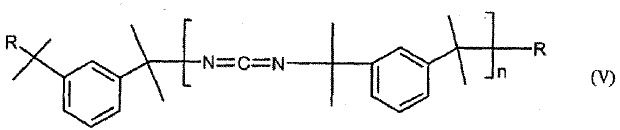 wobei
R =NCO
ist, wobei
n eine ganze Zahl von 2 bis 200 ist.

6. Mischungen gemäß mindestens einem der Ansprüche 1 bis 5, **dadurch gekennzeichnet, dass** Komponente C ausgewählt ist aus der Gruppe bestehend aus alkylierten Monophenolen, sterisch gehinderten Alkylthiomethylphenolen, sterisch gehinderten hydroxylierten Thiodiphenylethern, sterisch gehinderten Alkylidenbisphenolen, sterisch gehinderten Benzylphenolen, sterisch gehinderten hydroxybenzylierten Malonaten, sterisch gehinderten Hydroxybenzylaromaten, sterisch gehinderten phenolischen Triazinverbindungen, sterisch gehinderten phenolischen Benzylphosphonaten, Alkyl-N-(3,5-di-tert-butyl-4-hydroxyphenyl)carbamate, Ester der β-(3,5-di-tert-butyl-4-hydroxyphenyl)propionsäure mit ein- oder mehrwertigen Alkoholen, Ester der β-(5-tert- butyl-4-hydroxy-3-methylphenyl)propionsäure mit ein- oder mehrwertigen Alkoholen, Ester der β-(3,5-Dicyclohexyl-4-hydroxyphenyl)propionsäure mit ein- oder mehrwertigen Alkoholen, Ester der 3,5-Di-tert-butyl-4-hydroxyphenylessigsäure mit ein- oder mehrwertigen Alkoholen, Amide der β-(3,5-Di-tert-butyl-4-hydroxyphenyl)propionsäure und Mischungen aus zwei oder mehreren davon.

7. Mischungen gemäß mindestens einem der Ansprüche 1 bis 6, **dadurch gekennzeichnet, dass** die Komponente D ausgewählt ist aus der Gruppe bestehend aus organischen Phosphiten der allgemeinen Formel P(OR)₃ worin R einwertige organische Reste sind, organischen Phosphoniten der allgemeinen Formel PR'(OR)₂ worin R und R' einwertige organische Reste sind.

8. Mischungen gemäß mindestens einem der Ansprüche 1 bis 7, **dadurch gekennzeichnet, dass** die Komponente F ausgewählt ist aus der Gruppe bestehend aus mineralischen teilchenförmigen Füllstoffen auf Basis von Talk, Glimmer, Silikat, Quarz, Titandioxid, Wollastonit, Kaolin, amorphen Silikaten, Magnesiumcarbonat, Kreide, Feldspat und/oder Bariumsulfat und/oder Glasfasern.

9. Mischungen gemäß mindestens einem der Ansprüche 1 bis 8, **dadurch gekennzeichnet, dass** die Komponente G ausgewählt ist aus der Gruppe bestehend aus langkettigen Fettsäuren, deren Salzen, deren Esterderivaten und/oder Amidderivaten, Montanwachsen und/oder niedermolekularen Polyethylen- und/oder Polypropylenwachsen.

10. Zusammensetzungen, die neben den Mischungen gemäß mindestens einem der Ansprüche 1 bis 9 als weitere Komponenten I ein thermoplastisches Polymer oder eine Mischung davon, vorzugsweise thermoplastische Polyester, thermoplastische Polyamide, thermoplastische Polyurethane, thermoplastisch-elastomere Polyester, thermoplastisch-elastomere Polyamide und/oder thermoplastisch-elastomere Polyurethane, enthalten.

11. Zusammensetzungen gemäß Anspruch 10, **dadurch gekennzeichnet, dass** die Komponente E Melem ist.

12. Zusammensetzungen gemäß mindestens einem der Ansprüche 10 und 11, **dadurch gekennzeichnet, dass** Komponente F mineralische Füllstoffe auf Basis von Talk, Glimmer, Silikat, Quarz, Titandioxid, Wollastonit, Kaolin, amorphen Silikaten, Magnesiumcarbonat, Kreide, Feldspat und/oder Bariumsulfat und/oder Glasfasern umfasst.

13. Zusammensetzungen gemäß Anspruch 12, **dadurch gekennzeichnet, dass** Komponente F Glasfasern umfasst.

14. Zusammensetzungen gemäß mindestens einem der Ansprüche 10 bis 13, **dadurch gekennzeichnet, dass** Komponente I PBT oder thermoplastisch-elastomere Polyester umfasst.

15. Zusammensetzungen gemäß mindestens einem der Ansprüche 10 bis 14, **dadurch gekennzeichnet, dass** die Komponente G langkettige Fettsäuren, deren Salze, Esterderivate und/oder Amidderivate, Montanwachse und/oder niedermolekulare Polyethylen- und/oder Polypropylenwachse umfasst.

16. Verfahren zur Herstellung hydrolysestabiler und flammhemmender Polymerverbindungen, **dadurch gekennzeichnet, dass** die Komponenten A bis I gemäß mindestens einem der Ansprüche 1 bis 15 durch Schmelzextrusion in den angegebenen Gewichtsanteilen gemischt werden.

17. Fasern, Folien, Formteile und Formkörper aus hydrolysestabilen und flammhemmenden Polymerverbindungen gemäß mindestens einem der Ansprüche 10 bis 15.

18. Verwendung von Fasern, Folien und Formteilen aus hydrolysestabilen und flammhemmenden Polymerverbindungen gemäß mindestens einem der Ansprüche 10 bis 15 in Steckern, Schaltern, Kondensatoren, Isolationssystemen, Lampenfassungen, Spulenformen, Gehäusen, Steuerungen und anderen Artikeln.

19. Verwendung von Fasern, Folien, Formteilen und Formkörpern aus hydrolysebeständigen und flammhemmenden Polymerverbindungen gemäß mindestens einem der Ansprüche 10 bis 15 im Haushaltsbereich, in der Industrie, in der Medizin, in Kraftfahrzeugen, in
Flugzeugen, Schiffen, Raumfahrzeugen und anderen Fortbewegungsmitteln, in der Büroausstattung und in anderen Artikeln und Gebäuden.

## Revendications

1. Mélanges comprenant
- comme composant A, de 5 % à 80 % en poids d'un sel phosphinique de formule (la), d'un sel diphosphinique de formule (Ib), ou de polymères ou mélanges de deux ou plusieurs de ceux-ci, 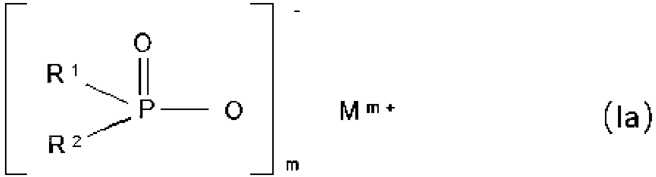 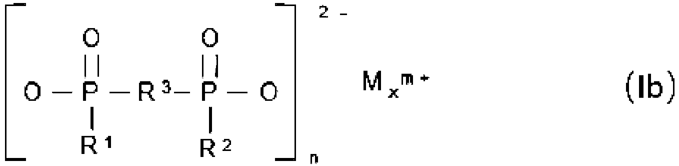 dans lesquels
R¹ , R² sont identiques ou différents et représentent H ou un groupe alkyle _{en C1à C6}linéaire ou ramifié, et/ou un groupe aryle,
R³ est un groupe alkylène en C₁à C₁₀, linéaire ou ramifié, arylène en C₆à C₁₀, alkylarylène ou arylalkylène,
M est H, Mg, Ca, Al, Sb, Sn, Ge, Ti, Fe, Zn, Zr, Ce, Bi, Sr, Mn, Li, Na, K et/ou une base azotée protonée,
m est 1 à 4,
n est compris entre 1 et 4, et
x est compris entre 1 et 4,
- comme composant B, 0,5 % à 20 % en poids d'un composé carbodiimide polymère ou de mélanges de ceux-ci,
- comme composant C, 0,5 % à 20 % en poids d'un phénol à encombrement stérique ou de mélanges de ceux-ci,
- comme composant D, 0 % à 20 % en poids d'un phosphite organique et/ou d'un phosphonite organique ou de mélanges de ceux-ci,
- comme composant E, 10 % à 40 % en poids d'un produit de condensation de mélamine ;
- comme composant F, 10 % à 70 % en poids d'une charge ou d'un renfort ou de mélanges de ceux-ci,
- comme composant G, 1 % à 30 % en poids d'un lubrifiant et/ou d'un agent de démoulage ou de mélanges de ceux-ci,
- comme composant H, 0 % à 40 % en poids d'autres additifs autres que les composants A à G,
la somme totale des composants en poids étant de 100 % en poids.

2. Mélanges selon la revendication 1, **caractérisés en ce que** R¹ , R² sont identiques ou différents et sont un groupe méthyle, éthyle, n-propyle, isopropyle, n-butyle, tert-butyle, n-pentyle et/ou phényle.

3. Mélanges selon au moins l'une des revendications 1 et 2, **caractérisés en ce que** R³ est un groupe méthylène, éthylène, n-propylène, isopropylène, n-butylène, tert-butylène, n-pentylène, n-octylène ou n-dodécylène ; du phénylène ou du naphtylène ; du méthylphénylène, de l'éthylphénylène, du tert-butylphénylène, du méthylnaphtylène, de l' de l'éthylnaphtylène ou du tert-butylnaphtylène ; du phénylméthylène, du phényléthylène, du phénylpropylène ou du phénylbutylène.

4. Mélanges selon au moins l'une des revendications 1 à 3, **caractérisés en ce que** les composés polymères contenant -N=C=N- du composant B sont des composés de formule générale (II) ou (III) 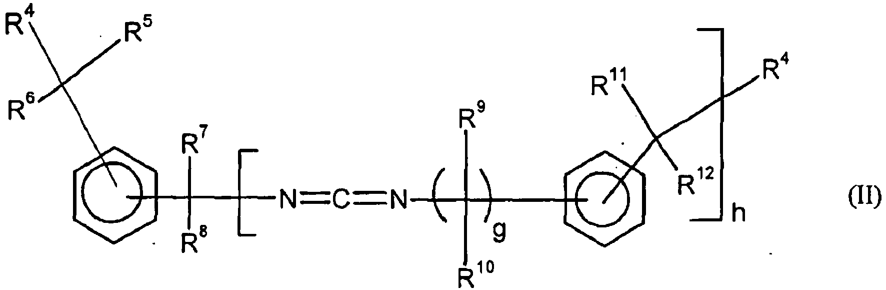 où
R⁴ est NCO,
R⁵ , R⁶ , R⁷ , R⁸ , R⁹ , R¹⁰ , R¹¹ et R¹²
représentent indépendamment l'un de l'autre un atome d'hydrogène ou un radical choisi parmi les groupes alkyle en C₁à C₁₀, aryle en C₆à C₁₂, aralkyle en C₇à C₁₃ou alkylaryle en C₇à C₁₃,
g est un nombre entier de 0 à 5,
h est un nombre entier de 2 à 100 ; 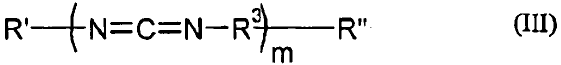
où, dans la formule (III),
m est un nombre entier compris entre 2 et 5000, de préférence un nombre entier compris entre 2 et 500,
R³ est un radical arylène, de préférence un radical 4,4'-méthylènebis(2,6-dialkylphényle) qui porte, dans au moins une position ortho, de préférence dans les deux positions ortho, par rapport à l'atome de carbone aromatique qui porte le groupe groupe -N=C=N-, des substituants aliphatiques et/ou cycloaliphatiques s ayant au moins 2 atomes de carbone, de préférence des radicaux ramifiés ou cycloaliphatiques ayant au moins 3 atomes de carbone,
R' est un groupe aryle, aralkyle, aryl-NCO ou aralkyl-NCO et
R" est -N=C=N-aryle, -N=C=N-aralkyle ou -NCO.

5. Mélanges selon la revendication 4, **caractérisés en ce que** le composant B comprend des composés contenant N=C=N de formule (IV) ou (V) 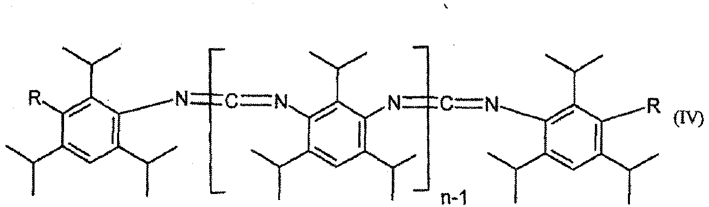 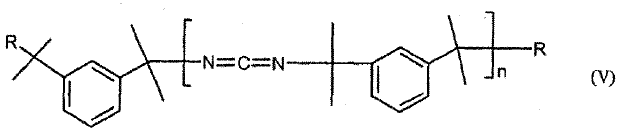 où
R est =NCO
dans laquelle
n est un nombre entier compris entre 2 et 200.

6. Mélanges selon au moins l'une des revendications 1 à 5, **caractérisés en ce que** le composant C est choisi dans le groupe constitué par les monophénols alkylés, les alkylthiométhylphénols à encombrement stérique, les éthers thiodiphényliques hydroxylés à encombrement stérique, les alkylidènebisphénols à encombrement stérique, les benzylphénols à encombrement stérique, les malonates hydroxybenzylés à encombrement stérique, les d'hydroxybenzylaromatiques à encombrement stérique, de composés triaziniques phénoliques à encombrement stérique, de phosphonates de benzyle phénoliques à encombrement stérique, carbamates d'alkyle N-(3,5-di-tert-butyl-4-hydroxyphényle), esters de l'acide β-(3,5-di-tert-butyl-4-hydroxyphényl)propionique avec des alcools mono- ou polyhydriques, esters de l'acide β-(5-tert- butyl-4-hydroxy-3-méthylphényl)propionique avec des alcools mono- ou polyhydriques, esters de l'acide β-(3,5-dicyclohexyl-4-hydroxyphényl)propionique avec des alcools mono- ou polyhydriques, esters de l'acide 3,5-di-tert-butyl-4-hydroxyphénylacétique avec des alcools mono- ou polyhydriques, amides de l'acide β-(3,5-di-tert-butyl-4-hydroxyphényl)propionique et mélanges de deux ou plusieurs de ces composés.

7. Mélanges selon au moins l'une des revendications 1 à 6, **caractérisés en ce que** le composant D est choisi dans le groupe constitué par les phosphites organiques de formule générale P(OR)₃ dans laquelle R représente des radicaux organiques monovalents, les phosphonites organiques de formule générale PR'(OR)₂ dans laquelle R et R' représentent des radicaux organiques monovalents.

8. Mélanges selon au moins l'une des revendications 1 à 7, **caractérisés en ce que** le composant F est choisi dans le groupe constitué par les charges minérales particulaires à base de talc, mica, silicate, quartz, dioxyde de titane, wollastonite, kaolin, silices amorphes, carbonate de magnésium, craie, feldspath et/ou sulfate de baryum et/ou fibres de verre.

9. Mélanges selon au moins l'une des revendications 1 à 8, **caractérisés en ce que** le composant G est choisi dans le groupe constitué par les acides gras à longue chaîne, leurs sels, leurs dérivés esters et/ou leurs dérivés amides, les cires de montan et/ou les cires de polyéthylène et/ou de polypropylène de faible poids moléculaire.

10. Compositions comprenant, en plus des mélanges selon au moins l'une des revendications 1 à 9, comme composants supplémentaires I, un polymère thermoplastique ou un mélange de ceux-ci, de préférence des polyesters thermoplastiques, des polyamides thermoplastiques, des polyuréthanes thermoplastiques, des polyesters thermoplastiques élastomères, des polyamides thermoplastiques élastomères et/ou des polyuréthanes thermoplastiques élastomères.

11. Compositions selon la revendication 10, **caractérisées en ce que** le composant E est du melem.

12. Compositions selon au moins l'une des revendications 10 et 11, **caractérisées en ce que** le composant F comprend des charges minérales particulaires à base de talc, mica, silicate, quartz, dioxyde de titane, wollastonite, kaolin, silices amorphes, carbonate de magnésium, craie, feldspath et/ou sulfate de baryum et/ou fibres de verre.

13. Compositions selon la revendication 12, **caractérisées en ce que** le composant F comprend des fibres de verre.

14. Compositions selon au moins l'une des revendications 10 à 13, **caractérisées en ce que** le composant I comprend du PBT ou des polyesters thermoplastiques élastomères.

15. Compositions selon au moins l'une des revendications 10 à 14, **caractérisées en ce que** le composant G comprend des acides gras à longue chaîne, leurs sels, leurs dérivés esters et/ou leurs dérivés amides, des cires de montan et/ou des cires de polyéthylène et/ou de polypropylène de faible poids moléculaire.

16. Procédé de production de composés polymères stables à l'hydrolyse et ignifuges, **caractérisé en ce que** les composants A à I selon au moins l'une des revendications 1 à 15 sont mélangés par extrusion à l'état fondu dans les proportions en poids spécifiées.

17. Fibres, films, pièces moulées et articles façonnés fabriqués à partir de composés polymères stables à l'hydrolyse et ignifuges selon au moins l'une des revendications 10 à 15.

18. Utilisation de fibres, films et pièces moulées fabriqués à partir de composés polymères stables à l'hydrolyse et ignifuges selon au moins l'une des revendications 10 à 15 dans des fiches, interrupteurs, condensateurs, systèmes d'isolation, douilles de lampe, bobines, boîtiers, commandes et autres articles.

19. Utilisation de fibres, films, moulages et articles moulés fabriqués à partir de composés polymères stables à l'hydrolyse et ignifuges selon au moins l'une des revendications 10 à 15 dans le secteur domestique, dans l'industrie, en médecine, dans les véhicules à moteur, dans les
dans l'aéronautique, dans la construction navale, dans l'aérospatiale et dans d'autres moyens de locomotion, dans l'aménagement de bureaux, ainsi que dans d'autres articles et bâtiments.
